(19) Europäisches Patentamt
European Patent Office
Office européen des brevets

(11) Veröffentlichungsnummer: **0 118 833**
**B1**

(12) # EUROPÄISCHE PATENTSCHRIFT

(45) Veröffentlichungstag der Patentschrift: **02.04.86**

(51) Int. Cl.⁴: **C 07 C 103/26**, C 07 C 153/067, A 01 N 37/36, A 01 N 37/44

(21) Anmeldenummer: **84102123.1**

(22) Anmeldetag: **29.02.84**

(54) **Substituierte Phenylhydroxy-thio-malonsäurediamide, Verfahren zu ihrer Herstellung sowie ihre Verwendung als Schädlingsbekämpfungsmittel.**

(30) Priorität: **10.03.83 DE 3308463**

(43) Veröffentlichungstag der Anmeldung: **19.09.84 Patentblatt 84/38**

(45) Bekanntmachung des Hinweises auf die Patenterteilung: **02.04.86 Patentblatt 86/14**

(84) Benannte Vertragsstaaten: **AT BE CH DE FR GB IT LI NL SE**

(56) Entgegenhaltungen:
**EP - A - 0 076 957**
**DE - A - 2 533 716**

(73) Patentinhaber: **BAYER AG, Konzernverwaltung RP Patentabteilung, D-5090 Leverkusen 1 Bayerwerk (DE)**

(72) Erfinder: **Fauss, Rudolf, Dr., Gerstenkamp 10, D-5000 Köln 80 (DE)**
Erfinder: **Findeisen, Kurt, Dr., In der Follmühle 10, D-5068 Odenthal 2 (DE)**
Erfinder: **Jäger, Gerhard, Dr., Gellertstrasse 18, D-5090 Leverkusen 1 (DE)**
Erfinder: **Becker, Benedikt, Dr., Metzkausenerstrasse 14, D-4020 Mettmann (DE)**
Erfinder: **Homeyer, Bernhard, Dr., Obere Strasse 28, D-5090 Leverkusen 3 (DE)**

**EP 0 118 833 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue substituierte Phenylhydroxymalonsäurediamide, ein Verfahren zu ihrer Herstellung sowie ihre Verwendung als Schädlingsbekämpfungsmittel.

Es ist bereits bekannt geworden, dass Carbamate wie 5,6-Dimethyl-2-dimethylamino-4-pyrimidinyl-dimethylcarbamat oder 1-Naphthyl-N-methylcarbamat insektizide Wirksamkeit besitzen (US-PS Nrn. 3493754, 2903478). Ihre Wirkung ist jedoch vor allem bei niedrigen Aufwandkonzentrationen nicht immer voll befriedigend.

Es wurden die neuen substituierten Phenylhydroxymalonsäurediamide der Formel (I) gefunden

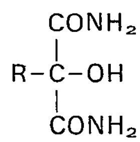 (I)

in welcher

R für Phenyl steht, das ein- bis dreifach gleich oder verschieden in m-, m'-, p-Stellung durch einen oder mehrere der folgenden Reste substituiert ist: Halogen, Nitro, Amino, OH, CN, $C_{1-4}$-Alkyl, $C_{1-4}$-Halogenalkyl, $C_{1-4}$-Alkoxy, $C_{1-4}$-Halogenalkoxy, Methylendioxy, Ethylendioxy, Difluormethylendioxy, halogensubstituiertes Ethylendioxy, lk$C_{1-4}$-Alkylthio, $C_{1-4}$-Halogenalkylthio, $C_{2-8}$-Alkoxyalkyl, $C_{2-8}$-Halogenalkoxyalkyl, $C_{1-4}$-Alkylsulfonyl, $C_{1-4}$-Halogenalkoxyalkyl, $C_{1-4}$-Alkylsulfonyl, $C_{1-4}$-Halogenalkylsulfonyl, Carboxyl, Carbalkoxy, mit Ausnahme von Phenyl, das einfach in m- oder p-Stellung durch F, Cl, $CH_3$, $CF_3$, $OCH_3$, $OCF_3$, $NO_2$, $NH_2$ substituiert ist, sowie mit Ausnahme von Phenyl, das zweifach in m-, m'- und p-Stellung durch Cl substituiert ist, sowie mit Ausnahme von m-Chlor-p-methylphenyl.

Weiter wurde gefunden, dass man die substituierten Phenylhydroxymalonsäurediamide der Formel (I)

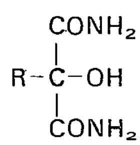 (I)

in welcher

R die oben angegebene Bedeutung besitzt, erhält, wenn man

a) substituierte Trimethylsilyloxyphenylmalonsäuredinitrile der Formel (II)

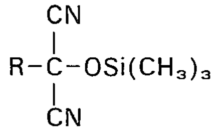 (II)

in welcher

R die oben angegebene Bedeutung hat,

mit anorganischen Säuren verseift, oder

b) Hydroxyphenylmalonsäureesteramide der Formel (III)

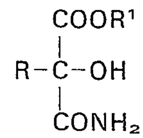 (III)

in welcher

R die oben angegebene Bedeutung hat und

$R^1$ für ggf. substituiertes Alkyl oder ggf. substituiertes Cycloalkyl steht,

mit Ammoniak umsetzt, oder

c) Hydroxyphenylmalonsäureester der Formel (IV)

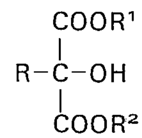 (IV)

in welcher

R bzw. $R^1$ die oben angegebene Bedeutung haben und

$R^2$ die für $R^1$ angegebene Bedeutung hat, wobei $R^1$ und $R^2$ gleich oder verschieden sein können,

mit Ammoniak umsetzt, oder

d) Hydroxy- bzw. Trimethylsilyloxyphenylmalonsäureamid-nitrile der allgemeinen Formel (V)

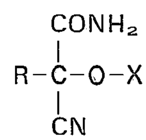 (V)

in welcher

R die oben angegebene Bedeutung hat und

X für Wasserstoff oder $Si(CH_3)_3$ steht,

mit anorganischen Säuren verseift, oder

e) Acyloxyphenylmalonsäurediamide der allgemeinen Formel (VI)

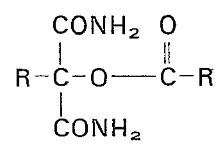 (VI)

in welcher

R die oben angegebene Bedeutung hat,

in Gegenwart von Basen verseift, oder

f) Acyloxyphenylmalonsäuredinitrile der allgemeinen Formel (VII)

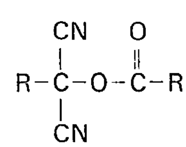 (VII)

in welcher

R die oben angegebene Bedeutung hat,

mit anorganischen Mineralsäuren verseift, oder

g) Acyloxyphenylmalonsäurediester der allgemeinen Formel (VIII)

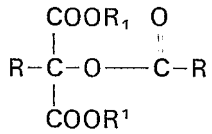

(VIII)

in welcher

R und R¹ die oben angegebene Bedeutung haben,

mit Ammoniak umsetzt.

Insbesondere bevorzugt sind Verbindungen der Formel (I), in welcher

R für Phenyl steht, das in m-, m'- und/oder p-Stellung durch Jod sowie dreifach durch Chlor sowie durch Fluor und Brom substituiert ist.

Als neue Wirkstoffe seien im einzelnen genannt: Verbindungen der Formel (I),

in welcher

R die folgenden Bedeutungen besitzt:

3-Nitrophenyl, 3-Jodphenyl, 4-Chlor-3-nitrophenyl, 3-Chlor-4-nitrophenyl, 3,4,5-Trichlorphenyl, 3,5-Dichlor-4-fluorphenyl, 4-Difluormethylphenyl, 3-Nitro-4-fluorphenyl, 3-Fluor-4-nitrophenyl, 3-Trifluormethyl-4-chlorphenyl, 4-Trifluormethyl-3-chlorphenyl, 3-Chlor-5-Trifluormethylphenyl, 3,4-Di(trifluormethyl)phenyl, 3,5-Di(trifluormethyl)phenyl, 3-Trifluormethyl-4,5-dichlorphenyl, 4-Trifluormethyl-3,5-dichlorphenyl, 4-Trifluormethoxy-3-nitrophenyl, 4-Trifluormethoxy-3-bromphenyl, 4-Nitro-3-trifluormethoxyphenyl, 4-Brom-3-trifluormethoxyphenyl, 3-Nitro-4-trifluormethoxy-5-chlorphenyl, 4-Methoxy-3,5-dichlorphenyl, 4-Methyl-3,5-dichlorphenyl, 4-Fluor-3-bromphenyl, 4-Brom-3-fluorphenyl, 4-Chlor-3-methylphenyl, 4-Trifluormethylmercaptophenyl, 4-Trifluormethoxy-3-chlorphenyl, 3-Trifluormethyl-4-chlorphenyl, 4-Chlordifluormethoxy-3-chlorphenyl, 4-Fluor-3-chlorphenyl, 3,4,5-Tribromphenyl, 3,4,5-Trifluorphenyl, 4-Fluor-3,5-dibromphenyl, 4-Amino-3,5-dichlorphenyl, 4-Hydroxy-3,5-dichlorphenyl, 4-Hydroxy-3-chlorphenyl, 4-Fluor-3-chlor-5-bromphenyl, 4-Chlor-3,5-dibromphenyl, 4-Brom-3,5-dichlorphenyl, 3-Brom-4,5-dichlorphenyl.

Verwendet man bei Verfahren a Trimethylsilyloxy-3,4,5-trichlorphenylmalonsäuredinitril als Ausgangsstoffe und 96%ige Schwefelsäure als Verseifungsmittel, so kann der Reaktionsablauf durch das folgende Formelschema wiedergegeben werden:

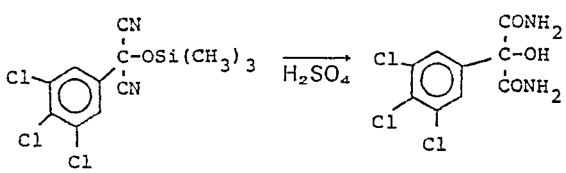


Die als Ausgangsprodukte verwendeten Trimethylsilyloxymalonsäuredinitrile der Formel (II) sind zum Teil bekannt [„Tetrahedron Letters", Nr. 17, 1449-1450 (1973)].

Neue Verbindungen können nach den dort angegebenen Methoden leicht entsprechend dem folgenden Formelschema synthetisiert werden:

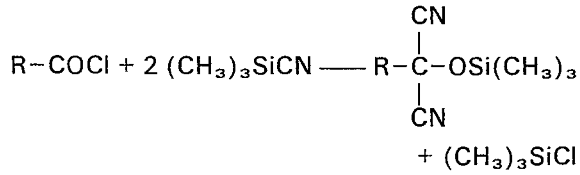

wobei R die vorgenannte Bedeutung besitzt.

In der Formel (II) steht R vorzugsweise für die Reste, die für die Verbindungen der Formel (I) als vorzugsweise genannt worden sind.

Als Verdünnungsmittel bei der Verseifung gemäss Verfahren a verwendet man im allgemeinen Wasser. Die saure Verseifung kann in den wasserfreien- oder Wasser enthaltenden Säuren durchgeführt werden, häufig genügen schon geringe Mengen Wasser, um die gewünschten Endprodukte zu erhalten.

Die Wassermenge kann aber in einem grösseren Bereich, zwischen 2 und 75%, bezogen auf die eingesetzte Säuremenge, variiert werden. Es ist weiterhin möglich, die Ausgangsprodukte der Formel (II) zuerst in einer wasserfreien Säure zu lösen und die benötigte Wassermenge zu einem späteren Zeitpunkt hinzuzufügen.

Als geeignete Säuren seien vorzugsweise genannt:

Schwefelsäure, Phosphorsäure, Salzsäure, Flusssäure, Borsäure. Besonders bevorzugt sind Schwefelsäure ($H_2SO_4$) und Salzsäure (HCl).

In einigen Fällen sind die Endprodukte der allgemeinen Formel (I) etwas wasserlöslich und müssen deshalb mit Hilfe eines Extraktionsmittels aus diesem entfernt werden. Als Extraktionsmittel kommen alle inerten organischen Lösungsmittel, die sich im Wasser nicht oder nur wenig mischen, in Betracht. Hierzu gehören Toluol, Xylol, Chlorbenzol, Dichlorobenzol, Essigsäureethylester, Methylenchlorid, Chloroform, Tetrachlorkohlenstoff und Ether. Im allgemeinen ist ein Extraktionsmittel aber nicht nötig.

Die Reaktionstemperaturen können in einem grösseren Bereich variiert werden. Im allgemeinen arbeitet man zwischen etwa −15 bis 100° C, vorzugsweise zwischen 0 und 80° C, insbesondere zwischen 20 und 60° C.

Die Umsetzung wird normalerweise bei Normaldruck durchgeführt. Sie kann aber auch bei erhöhtem Druck durchgeführt werden. Im allgemeinen arbeitet man bei Drücken zwischen etwa 1 bar und etwa 10 bar, vorzugsweise zwischen 1 und 5 bar.

Bei der Durchführung des erfindungsgemässen Verfahrens a setzt man auf 1 Mol der substituierten Trimethylsilyloxyphenylmalonsäuredinitrile (Formel II) etwa 0,5 bis 20 Mol, vorzugsweise 1 bis 5 Mol, an anorganischer Säure ein.

Die in der Säure gelöste Verbindung der Formel (II) wird nach 30 min bis 2 h Rühren auf Eis gegossen und entweder durch Absaugen oder Extraktion gewonnen. Die Reinigung wird im allgemeinen durch Umkristallisation vorgenommen.

Verfahren b wird durchgeführt, indem man Hydroxymalonsäureesteramide (III) mit Ammoniak nach folgendem Formelschema umsetzt:

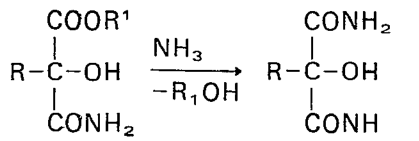


(III)

Bevorzugt sind Verbindungen der Formel (III), in welcher R für die weiter oben angegebenen bevorzugten Definitionen steht und R[1] für $C_{1-4}$-Alkyl, das ggf. durch Halogen, insbesondere Chlor, oder $C_{1-4}$-Alkoxy substituiert ist, steht. Insbesondere steht R[1] für Methyl, Ethyl oder Propyl.

Im allgemeinen wird in gegenüber den Edukten und Produkten inerten Lösungsmitteln gearbeitet.

Bevorzugte Lösungsmittel sind Alkohole wie Methanol, Ethanol, Propanol, Isopropanol, Kohlenwasserstoffe wie Toluol, Xylol, Halogenkohlenwasserstoffe wie Chlorbenzol, Methylenchlorid, Tetrachlorkohlenstoff und Ether wie Diethylether, Dioxan. Selbstverständlich sind auch Mischungen der Lösungsmittel geeignet. Besonders bevorzugt sind die Alkohole.

Auf 100 ml Lösungsmittel werden 5-100 g, bevorzugt 10-70 g des Hydroxymalonsäureesteramids eingesetzt.

Die Reaktion wird bei Temperaturen von −20 bis 100° C, bevorzugt bei Temperaturen von 0 bis 80° C, besonders bevorzugt bei Temperaturen von 20 bis 60° C durchgeführt.

Im allgemeinen wird in die Lösung der Ausgangsverbindung der Formel (III) Ammoniak gasförmig eingeleitet, wobei mindestens die der Stöchiometrie entsprechende Menge Ammoniak eingesetzt werden muss.

Bevorzugt wird aber mit einem Überschuss an Ammoniak gearbeitet. Unter Umständen muss auch unter Druck gearbeitet werden.

Es ist aber ebenso möglich, eine Lösung des Ausgangsproduktes mit einer ggf. wässerigen $NH_3$-Lösung zu mischen. Es kann auch in üblicher Weise im Zweiphasen-System gearbeitet werden.

Die Reaktion verläuft schnell und deshalb kann fast sofort nach Beendigung der Ammoniakeinleitung aufgearbeitet werden.

Sofern nicht das schwer lösliche Endprodukt schon während der Reaktion oder durch Abkühlen ausfällt und abgesaugt werden kann, wird eingeengt und das fast reine Produkt der Formel (I) – ggf. durch Umkristallisation von Spuren Verunreinigung befreit – erhalten.

Die Verbindungen der Formel (III) werden erhalten, indem man Hydroxy- bzw. Silyloxymalonesternitrile der allgemeinen Formel (IX) mit anorganischen Säuren nach folgendem Formelschema verseift:

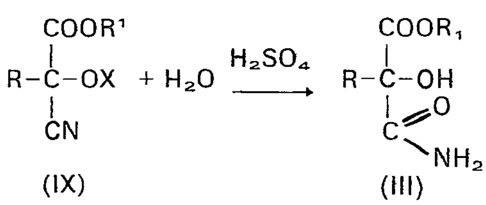


(IX) (III)

Bevorzugte Verbindungen der Formel (IX) sind diejenigen, in denen die Reste R und R[1] die weiter oben angegebene bevorzugte Definition besitzen und X für Wasserstoff steht.

Für die Durchführung der Verseifung gilt das für die Verseifung der Verbindungen der Formel (II) Gesagte (vgl. Verfahren a).

Es ist vorteilhaft, bei der Aufarbeitung bei Temperaturen unter 10° C zu arbeiten, um eine eventuelle Hydrolyse der Estergruppe im sauer-wässerigen Milieu auszuschliessen.

Die Verbindungen der Formel (IX) werden erhalten, indem man α-Ketocarbonsäureester der allgemeinen Formel (X)

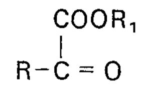

(X)

wobei

R und $R_1$ die oben angegebene Bedeutung haben,

mit HCN oder HCN-abspaltenden Verbindungen oder mit Trimethylsilylcyanid umsetzt.

Dies sei durch folgende 3 Reaktionsgleichungen illustriert.

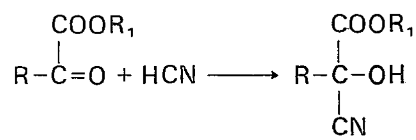

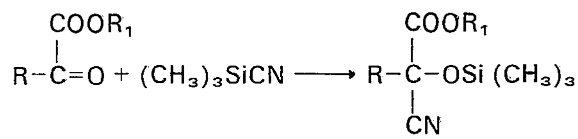

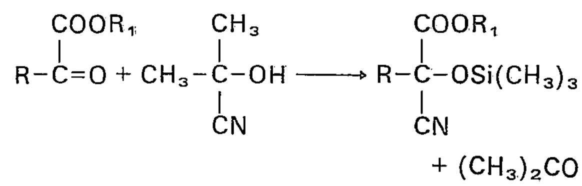

Als HCN-abspaltende Substanzen kommen hierfür Cyanhydrine zum Einsatz, beispielsweise seien Acetoncyanhydrin oder Benzaldehydcyanhydrin genannt.

Die Umsetzung von (X) zu (IX) verläuft nach den in der Literatur bekannten Methoden unter Anwesenheit geringer Mengen alkalischer Katalysatoren, beispielsweise Natriumcyanid, Kaliumcyanid oder tertiäre Amine wie Triethylamin sowie Alkali- und Erdalkalihydroxide und -carbonate.

Während die Addition von molaren Mengen HCN bzw. Trimethylsilylcyanid leicht exotherm bereits bei Raumtemperatur verläuft und nach beendeter Zugabe der Reagenzien abgeschlossen ist, muss bei Einsatz von Cyanhydrinen einige Zeit erhitzt werden, um einen vollständigen Umsatz zu erreichen. Hierbei ist es auch sinnvoll, auf 1 Mol α-Ketoester der Formel (X) mehr als 1 Mol Cyanhydrin anzusetzen.

Bevorzugt werden 1,1 bis 3 Mol, ganz besonders bevorzugt 1,2 bis 2 Mol Cyanhydrin verwendet. Der Überschuss wird nach beendeter Reaktion wieder abdestilliert.

Die Reaktionen verlaufen im allgemeinen ohne Anwesenheit von Lösungsmitteln, jedoch kann die Verwendung von gegenüber den Produkten und Edukten inerten Lösungsmitteln wie z. B. Methanol, Ethanol, Isopropanol, Toluol, Chlorbenzol, Methylenchlorid, Tetrachlorkohlenstoff und Diethylether in einigen Fällen durchaus sinnvoll sein.

Die Reaktionsbedingungen für die Umsetzungen sind sehr variabel. So können z. B. auch HCN und Trimethylsilylcyanid überstöchiometrisch eingesetzt werden, jedoch bringt ein mehr als 10%iger molarer Überschuss keinerlei Vorteile mehr. Ebenso ist die Reaktionstemperatur in weiten Grenzen variierbar, es kann im Temperaturbereich von −50 bis 300° C gearbeitet werden, wobei bei höheren Temperaturen entweder in der Gasphase oder in der Flüssigphase unter Druck die Umsetzungen vorgenommen werden. Auch hier ergibt sich gegenüber den zuerst beschriebenen bevorzugten Verfahrensbedingungen kein signifikanter Vorteil.

Verbindungen der Formel (X) sind bekannt bzw. lassen sich analog zu bekannten Methoden darstellen [S. Hünig, R. Schaller, „Angewandte Chemie", *94*, 10 (1982)].

Verfahren c wird durchgeführt, indem man Hydroxymalonsäurediester der Formel (IV) mit Ammoniak nach folgendem Formelschema umsetzt:

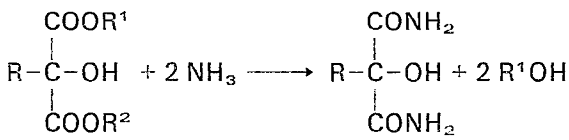

(IV)

Für die Durchführung der Amidierung gilt das für die Umsetzung der Verbindungen der Formel (III) (vgl. Verfahren b) Gesagte.

Die Verbindungen der Formel (IV) können analog zu dem in „Chimica e. Industria", 1964, *5*, 509-517 angegebenen Verfahren hergestellt werden.

Bevorzugte Verbindungen der Formel (IV) sind diejenigen, in denen die Reste R und $R^1$ die oben angegebenen bevorzugten Bedeutungen besitzen. $R^2$ besitzt dieselben bevorzugten Bedeutungen wie sie oben für $R^1$ angegeben worden sind. $R^1$ und $R^2$ können gleich oder verschieden sein.

Sie werden erhalten, indem man entweder gemäss

C1) Verbindungen der Formel (IX)

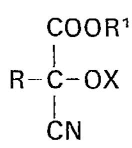 (IX)

in welcher

R und $R^1$ die oben angegebene Bedeutung haben,

mit einem Alkohol der Formel

$$R^2-OH$$

in welcher

$R^2$ die oben angegebene Bedeutung hat,

verestert, oder

C2) Verbindungen der Formel (II)

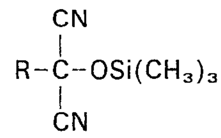 (II)

verestert.

Verfahren C1 zur Herstellung der Verbindungen der Formel (IV) wird durchgeführt, indem man nach der Methode von Pinner (A. Pinner, „Die Imidoether und ihre Derivate", Berlin 1882) arbeitet.

Hierbei wird im allgemeinen die nitrilgruppenhaltige Verbindung entweder mit Salzsäure oder mit Schwefelsäure in alkoholischer Lösung ($R_2OH$) und Wasser umgesetzt.

Im folgenden werden beide Methoden beispielhaft beschrieben, ohne jedoch deshalb die Allgemeingültigkeit der Verfahren einzuschränken.

a.) Verseifung mit Salzsäure:

Hierbei wird die Verbindung der Formel (IX) mit 2 bis 20 molarem Überschuss an absolutem Alkohol, der Formel $R^2OH$ bei −10 bis 5° C mit 1,1 bis 20 Mol HCl-Gas behandelt. Dann wird ca. 1 h bei unter 30° C nachgerührt und anschliessend mit der stöchiometrischen Menge $H_2O$ versetzt und ca. eine weitere Stunde bei 0 bis 50° C gerührt. Anschliessend wird abgesaugt und das Filtrat eingeengt.

Der Rückstand wird mit einem inerten Lösungsmittel z. B. Methylenchlorid aufgenommen, mit Wasser bei 0 bis 10° C gewaschen und nach Entfernen des Lösungsmittels ggf. durch Destillation gereinigt.

Die Reaktion kann aber auch invers vorgenommen werden, d. h. die Verbindung der Formel (IX) wird zwischen −20 und +10° C in eine Alkohol-Salzsäure-Lösung eingebracht.

b.) Verseifung mit Schwefelsäure:

Auf 1 Mol der Verbindung der Formel (IX) werden 100 bis 1000 g konzentrierte Schwefelsäure, 2 bis 25 Mol des Alkohols der Formel $R^2OH$ sowie 1 Mol Wasser eingesetzt. Ein stärkeres Abweichen von der Stöchiometrie bei der Dosierung der Wassermenge führt zu Ausbeuteverlusten. Ein eventueller Wassergehalt der Ausgangsprodukte (Alkohol und Schwefelsäure) muss bei den Mengen zuzusetzenden Wassers berücksichtigt werden. Die Ansatzlösung wird bei Temperaturen von 0 bis 150° C, bevorzugt 20 bis 100° C, besonders bevorzugt 60 bis 90° C, 1 bis 20 h gerührt. Ggf. kann unter erhöhtem Druck gearbeitet werden. Dann wird in Eiswasser eingerührt und mit einem gebräuchlichen organischen Lösungsmittel wie z. B. Methylenchlorid, Toluol, Essigsäureethylester kalt extrahiert und das Produkt ggf. durch Destillation gereinigt.

Verfahren C2 zur Herstellung der Verbindungen der Formel (IV) wird nach der bereits beschriebenen Methode von Pinner (vgl. Verfahren C1) durchgeführt, wobei im Falle des Arbeitens mit Salzsäure allerdings nach der inversen Methode gearbeitet werden muss, da ein Vorlegen der Ver-

bindungen der Formel (II) in Alkohol nicht möglich ist.

In diesem Fall käme es zur Zerstörung der Verbindungen der Formel (II).

Im folgenden soll beispielhaft die Reaktionsdurchführung für die inverse Pinner-Veresterung beschrieben werden, ohne dass damit die allgemeine Durchführbarkeit der Reaktion eingeschränkt wird:

Der absolute Alkohol der Formel $R^2OH$ (wobei $R^2$ die weiter oben angegebene Bedeutung hat) wird im 2 bis 20fachen molaren Überschuss – bezogen auf die Verbindung der Formel (II) – vorgelegt und bei −10 bis +10° C mit HCL-Gas gesättigt. Hierbei müssen für 1 Mol Verbindung der Formel (II) mindestens 2 Mol HCl aufgenommen werden. Bei −20 bis +10° C, bevorzugt bei −10° C, wird die Reaktionskomponente der Formel (II) zugetropft und anschliessend ca. 1 h bei max. 30° C nachgerührt, bevor mit der stöchiometrischen Menge Wasser – bezogen auf eingesetzte CN-Gruppen – ggf. verdünnt im Alkohol, versetzt wird.

Ein zu starker Über- oder Unterschuss der Wassermenge führt zu Ausbeuteverlusten.

Nachdem noch ca. 1 h bei 0 bis 50° C nachgeführt worden ist, wird analog zu Verfahren C1 aufgearbeitet.

Wird das Verfahren C2 in Schwefelsäure durchgeführt, so wird analog zu der bei Verfahren C1 beschriebene Schwefelsäurevariante gearbeitet. Besonders bevorzugt wird hierbei aber die Verfahrensvariante, bei der Alkohol, Säure und Wasser vorgelegt werden und sodann die Verbindungen der Formel (II) zugegeben wird.

Von einer Destillation der Verbindungen der Formel (IV) sollte abgesehen werden, wenn deren Siedepunkt bei Destillationsbedingungen 160° C deutlich überschreiten.

Verfahren d wird durchgeführt, indem man Hydroxy- bzw. Trimethylsilyloxymalonsäureamidnitrile der allgemeinen Formel (V) mit anorganischen Säuren nach folgendem Formelschema verseift:

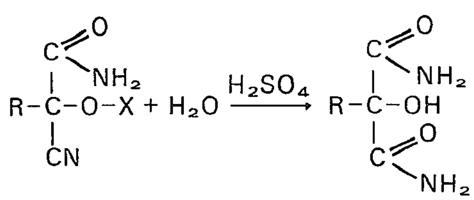


(V)

Für die Durchführung der Verseifung gilt das für die Verseifung der Verbindung der Formel (II) Gesagte (vgl. Verfahren a).

Verbindungen der Formel (V) sind neu.

Bevorzugt sind Verbindungen der Formel (V), wobei R die weiter oben angegebene bevorzugte Definition besitzt und Y für O steht.

Sie werden erhalten, indem man α-Ketosäureamide der allgemeinen Formel

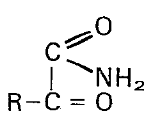

(XI)

wobei

R die oben angegebene Bedeutung hat mit HCN oder HCN-abspaltenden Mitteln oder mit Trimethylsilylcyanid umsetzt.

Dies sei durch folgende 3 Reaktionsgleichungen illustriert:

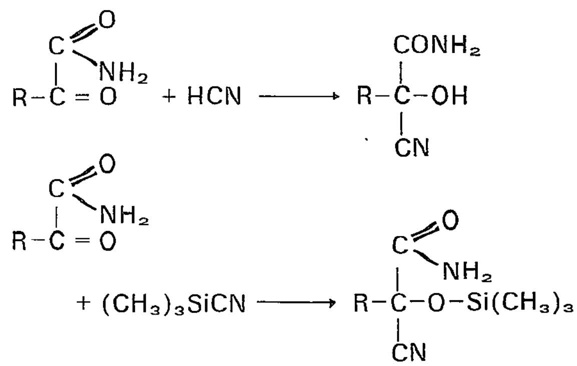

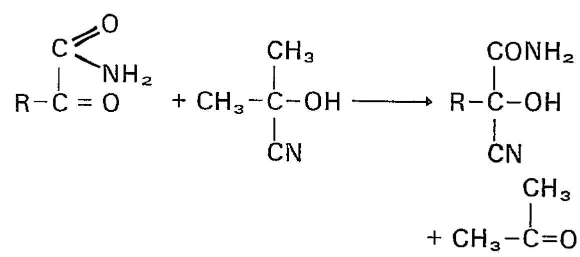

Als HCN-abspaltende Substanzen kommen hierfür Cyanhydrine zum Einsatz, beispielsweise seien Acetoncyanhydrin oder Benzaldehydcyanhydrin genannt.

Die Umsetzung von (XI) zu (V) verläuft nach den in der Literatur bekannten Methoden unter Anwesenheit geringer Mengen alkalischer Katalysatoren, beispielsweise Natriumcyanid, Kaliumcyanid oder tertiäre Amine wie Triethylamin, sowie Alkali- und Erdalkalihydroxide und -carbonate.

Während die Addition von molaren Mengen HCN bzw. Trimethylsilylcyanid leicht exotherm bereits bei Raumtemperatur verläuft und nach beendeter Zugabe der Reagenzien abgeschlossen ist, muss bei Einsatz von Cyanhydrinen einige Zeit erhitzt werden, um einen vollständigen Umsatz zu erreichen. Hierbei ist es auch sinnvoll, auf 1 Mol Ketoamid der Formel (XI) mehr als 1,1 bis 3, bevorzugt 1,2 bis 2 Mol, Cyanhydrin verwendet. Der Überschuss wird nach beendeter Reaktion wieder abdestilliert.

Die Reaktionen verlaufen im allgemeinen ohne Anwesenheit von Lösungsmittel, jedoch kann die Verwendung von gegenüber den Produkten und Edukten inerten Lösungsmitteln wie z. B. Methanol, Ethanol, Isopropanol, Toluol, Chlorbenzol, Methylenchlorid, Tetrachlorkohlenstoff und Diethylether in einigen Fällen durchaus sinnvoll sein.

Die Reaktionsbedingungen für die Umsetzungen sind sehr variabel. So können z. B. HCN und Trimethylsilylcyanid auch überstöchiometrisch eingesetzt werden, jedoch bringt ein mehr als 10%iger molarer Überschuss keinerlei Vorteile mehr. Ebenso ist die Reaktionstemperatur in weiten Grenzen variierbar, es kann im Temperaturbereich von −50 bis 300° C gearbeitet werden, wobei bei höheren Temperaturen entweder in der Gasphase oder in der Flüssigphase unter Druck die Umsetzungen vorgenommen werden. Aber auch hier ergibt sich gegenüber den zuerst beschriebenen bevorzugten Versuchsparametern kein signifikanter Vorteil.

Verbindungen der Formel (XI) sind bekannt bzw. lassen sich analog zu bekannten Methoden darstellen [„Angewandte Chemie" *94*, 10 (1982), „Ann." *691*, 92 (1966)].

Verfahren e wird durchgeführt, indem man Acyloxymalonsäurediamide der allgemeinen Formel (VI) in Gegenwart von Basen verseift. Die Reaktion lässt sich durch folgendes Formelschema darstellen:

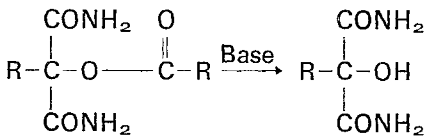


(VI)

Es werden bevorzugt Verbindungen der Formel (VI) eingesetzt, in welcher R die weiter oben angegebene bevorzugte Bedeutung besitzt.

Die Reaktion wird durchgeführt, indem man 1 Mol der Verbindung der Formel (VI) in einem inerten Verdünnungsmittel mit in etwa der äquimolaren Menge einer Base versetzt.

Als Verdünnungsmittel dienen Wasser, Alkohole wie Methanol, Ethanol, tert.-Butanol, Kohlenwasserstoffe, wie Toluol, Tetrachlorkohlenstoff, Methylenchlorid, Ether wie Diethylether, Dioxan.

Bevorzugt sind Wasser, Methanol oder Ethanol. Es kann auch in üblicher Weise im zweiphasigen System gearbeitet werden.

Als Basen dienen Alkali- und Erdalkalihydroxide, -carbonate, -hydrogencarbonate, -alkoholate wie Natriumhydroxid, Kaliumhydroxid, Natriumcarbonat, Natriummethylat, Natriumethylat, sowie Ammoniak, Amine z. B. Triethylamin, Pyridin, Dimethylamin.

Die Reaktion wird durchgeführt zwischen −10 bis +60° C, bevorzugt zwischen 0 bis 30° C.

Die Aufarbeitung nach beendeter Reaktion erfolgt in üblicher Weise.

Die Verbindungen der Formel (VI) sind teilweise bekannt. Sie können nach bekannten Verfahren hergestellt werden [„J. Am. Chem. Soc.", 71, S. 34 (1949)].

Verfahren f wird durchgeführt, indem man Acyloxymalonsäuredinitrile der Formel (VII) mit anorganischen Säuren verseift. Die Reaktion lässt sich durch folgendes Formelschema darstellen:

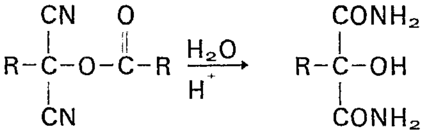


(VII) (II)

Bevorzugt werden Verbindungen der Formel (VII) eingesetzt, in welcher R die weiter oben angegebene vorzugsweise Bedeutung besitzt.

Verbindungen der Formel (VII) sind teilweise bekannt. Sie lassen sich nach bekannten Verfahren herstellen [vgl. „Journal für prakt. Chemie" (2) 39, S. 260 (1889), „Chemistry a. Industry", 1970, S. 1408].

Verfahren f wird durchgeführt, indem man die Verbindungen der Formel (VII) mit konzentrierter Schwefelsäure und 2 bis 10% Wasser, bezogen auf die eingesetzte Schwefelsäure, mehrere Stunden bei Temperaturen zwischen 50 und 150° C, bevorzugt 60 bis 100° C, erhitzt.

Verfahren g wird durchgeführt, indem man Acyloxymalonsäurediester der Formel (VIII) mit Ammoniak nach folgendem Reaktionsschema umsetzt:

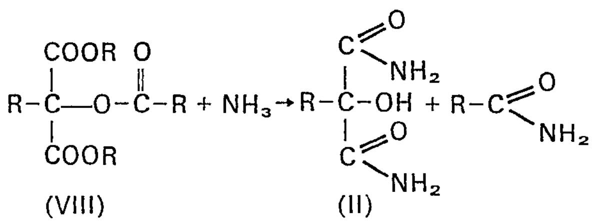

(VIII) (II)

Für die Durchführung der Reaktion gilt das für die Amidierung der Hydroxylmalonsäurediester der Formel (IV) nach Verfahren c Gesagte. Lediglich die Aufarbeitung wird etwas erschwert durch die Tatsache, dass die bei der Amidierung von Verbindungen der Formel (VIII) entstehenden beiden Amide infolge ihrer ähnlichen Löslichkeiten etwas schwer durch Kristallisation zu trennen sind.

Verbindungen der Formel (VIII) werden erhalten, indem man dimere Acylcyanide der Formel (VII) nach der Methode von Pinner verestert.

Die Bedingungen sind die gleichen wie für die Veresterung der Verbindungen der Formel (IX) bereits beschrieben (vgl. Verfahren C1 und C2).

Lediglich die Destillation muss auf Grund der hohen Siedepunkte bei einigen Vertretern unterbleiben. In diesem Fall kann aber auch ohne Schwierigkeiten mit dem Rohprodukt weitergearbeitet werden.

Die Wirkstoffe eignen sich bei guter Pflanzenverträglichkeit und günstiger Warmblütertoxizität zur Bekämpfung von tierischen Schädlingen, insbesondere Insekten, Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwickelungsstadien wirksam.

Zu den oben erwähnten Schädlingen gehören:

Aus der Ordnung der Isopoda z. B. *Oniscus asellus, Armadillidium vulgare, Porcellio scaber.*

Aus der Ordnung der Diplopoda z. B. *Blaniulus guttulatus.*

Aus der Ordnung der Chilopoda z. B. *Geophilus carpophagus, Scutigera spec.*

Aus der Ordnung der Symphyla z. B. *Scutigerella immaculata.*

Aus der Ordnung der Thysanura z. B. *Lepisma saccharina.*

Aus der Ordnung der Collembola z. B. *Onychiurus armatus.*

Aus der Ordnung der Orthoptera z. B. *Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.*

Aus der Ordnung der Dermaptera z. B. *Forficula auricularia.*

Aus der Ordnung der Isoptera z. B. *Reticulitermes spp.*

Aus der Ordnung der Anoplura z. B. *Phylloxera vastatrix, Pemphigus spp., Pediculus humanus corporis, Haematopinus spp., Linognathus spp.*

Aus der Ordnung der Mallophaga z. B. *Trichodectes spp., Damalinea spp.*

Aus der Ordnung der Thysanoptera z. B. *Hercinothrips femoralis, Thrips tabaci.*

Aus der Ordnung der Heteroptera z. B. *Eurygaster spp., Dysdercus intermedius, Piesma quadrata, Cimex lectularius, Rhodnius prolixus, Triatoma spp.*

Aus der Ordnung der Homoptera z. B. *Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.*

Aus der Ordnung der Lepidoptera z. B. *Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.*

Aus der Ordnung der Coleoptera z. B. *Anobium punctatum, Rhizopertha dominica, Bruchidius obtectus, Acanthoscelides obtectus, Hylotrupes bahulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.*

Aus der Ordnung der Hymenoptera z. B. *Diprion spp., Hoplocampa spp., Lasius spp., Monomorium pharaonis, Vespa spp.*

Aus der Ordnung der Diptera z. B. *Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.*

Aus der Ordnung der Siphonaptera z. B. *Xenopsylla cheopis, Ceratophyllus spp.*

Aus der Ordnung der Arachnida z. B. *Scorpio maurus, Latrodectus mactans.*

Aus der Ordnung der Acarina z. B. *Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.*

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, ggf. unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid; als feste Trägerstoffe kommen in Frage: z. B. natürliche Gesteinsmehle, wie Kaoline, Tonerden, Talkum, Kreide, Quarz, Attapulgit, Montmorillonit

oder Diatomeenerde und synthetische Gesteinsmehle, wie hochdisperse Kieselsäure, Aluminiumoxid und Silikate; als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z. B. nichtionogene und anionische Emulgatoren, wie Polyoxyethylen-Fettsäure-Ester, Polyoxyethylen-Fettalkohol-Ether, z. B. Alkylarylpolyglykol-Ether, Alkylsulfonate, Alkylsulfate, Arylsulfonate sowie Eiweisshydrolysate; als Dispergiermittel kommen in Frage: z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90%.

Die erfindungsgemässen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u. a.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

*Herstellungsbeispiele:*

*Beispiel 1:*

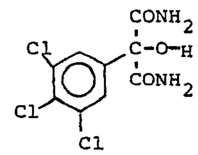

In einem 1-l-Vierhalskolben mit Rückflusskühler, Rührer, Thermometer und Tropftrichter werden 1175 ml Schwefelsäure (96%ig) vorgelegt und von aussen gekühlt. Dann tropft man innerhalb von 30 min, wobei die Innentemperatur 50° C nicht übersteigen sollte, 220 g 3,4,5-Trichlorphenyltrimethylsilyloxymalonsäuredinitril in die Schwefelsäure. Nachdem die exotherme Reaktion beendet ist, wird 120 min nachgerührt.

Die Reaktionsmischung wird in Eiswasser gegossen, das Reaktionsprodukt fällt aus, wird abgesaugt, neutral gewaschen, getrocknet und der Rückstand mit Ethanol digeriert.

Ausbeute: 160 g 3,4,5-Trichlorphenylhydroxymalonsäurediamid.

Schmelzpunkt: 233-234° C.

Analog Beispiel 1 werden erhalten:

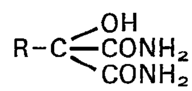

| Beispiel Nr. | R | Fp. ° C |
|---|---|---|
| 2 | 3-Jodphenyl | 189 |
| 3 | 3-Nitro-4-chlorphenyl | 153-154 |
| 4 | 3-Brom-4-fluorphenyl | 180-181 |
| 5 | 3-Methyl-4-chlorphenyl | 173-174 |
| 6 | 4-Trifluormethylmercaptophenyl | 140 |
| 7 | 3-Chlor-4-trifluormethoxyphenyl | 159 |
| 8 | 3-Chlor-4-chlordifluormethoxyphenyl | 166 |
| 9 | 3-Chlor-4-fluorphenyl | 175-177 |
| 10 | 3-Chlor-4-trifluormethylphenyl | 182-188 (Zers.) |
| 11 | 4-Fluor-3,5-dichlorphenyl | 226 (Zers.) |
| 12 | 4-Difluormethylphenyl | |
| 13 | 3-Nitro-4-fluorphenyl | |
| 14 | 3-Fluor-4-nitrophenyl | |
| 15 | 3-Trifluormethyl-4-chlorphenyl | |
| 16 | 3-Chlor-5-trifluormethylphenyl | |

| Beispiel Nr. | R | Fp. °C |
|---|---|---|
| 17 | 3,4-Di-(trifluormethyl)-phenyl | |
| 18 | 3,5-Di-(trifluormethyl)-phenyl | |
| 19 | 3-Trifluormethyl-4,5-dichlorphenyl | |
| 20 | 3-Nitro-4-trifluormethoxyphenyl | |
| 21 | 3-Brom-4-trifluormethoxyphenyl | |
| 22 | 3-Nitro-4-trifluormethoxy-5-chlorphenyl | |
| 23 | 4-Methoxy-3,5-dichlorphenyl | 219-220 |
| 24 | 4-Methyl-3,5-dichlorphenyl | |
| 25 | 4-Amino-3,5-dichlorphenyl | 234-235 |
| 26 | 4-Hydroxy-3,5-dichlorphenyl | 251-255 |
| 27 | 4-Hydroxy-3-chlorphenyl | |

*Beispiel A:*

Plutella-*Test*

Lösungsmittel: 3 Gew.-Teile Dimethylformamid
Emulgator: 1 Gew.-Teil Alkylarylpolyglykolether

Zur Herstellung einer zweckmässigen Wirkstoffzubereitung vermischt man 1 Gew.-Teil Wirkstoff mit der angegebenen Menge Lösungsmittel und der angegebenen Menge Emulgator und verdünnt das Konzentrat mit Wasser auf die gewünschte Konzentration.

Kohlblätter *(Brassica oleracea)* werden durch Tauchen in die Wirkstoffzubereitung der gewünschten Konzentration behandelt und mit Raupen der Kohlschabe *(Plutella maculipennis)* besetzt, solange die Blätter noch feucht sind.

Nach der gewünschten Zeit wird die Abtötung in % bestimmt. Dabei bedeutet 100%, dass alle Raupen agbetötet wurden; 0% bedeutet, dass keine Raupen abgetötet wurden.

Bei diesem Test zeigen z. B. die folgenden Verbindungen der Herstellungsbeispiele überlegene Wirksamkeit gegenüber dem Stand der Technik: 5, 9, 1, 4, 2.

*Beispiel B:*

Tetranychus-*Test (resistent)*

Lösungsmittel: 3 Gew.-Teile Dimethylformamid
Emulgator: 1 Gew.-Teil Alkylarylpolyglykolether

Zur Herstellung einer zweckmässigen Wirkstoffzubereitung vermischt man 1 Gew.-Teil Wirkstoff mit der angegebenen Menge Lösungsmittel und der angegebenen Menge Emulgator und verdünnt das Konzentrat mit Wasser auf die gewünschte Konzentration.

Bohnenpflanzen *(Phaseolus vulgaris)*, die stark von allen Entwicklungsstadien der gemeinen Spinnmilbe oder Bohnenspinnmilbe *(Tetranychus urticae)* befallen sind, werden durch Tauchen in die Wirkstoffzubereitung der gewünschten Konzentration behandelt.

Nach der gewünschten Zeit wird die Abtötung in % bestimmt. Dabei bedeutet 100%, dass alle Spinnmilden abgetötet wurden; 0% bedeutet, dass keine Spinnmilben abgetötet wurden.

Bei diesem Test zeigen z. B. die folgenden Verbindungen der Herstellungsbeispiele überlegene Wirksamkeit gegenüber dem Stand der Technik: 4, 1, 5, 9.

*Beispiel C:*

*Grenzkonzentrations-Test/Bodeninsekten*

Testinsekt: *Phorbia antiqua*-Maden (im Boden)
Lösungsmittel: 3-Gew.-Teile Aceton
Emulgator: 1 Gew.-Teil Alkylarylpolyglykolether

Zur Herstellung einer zweckmässigen Wirkstoffzubereitung vermischt man 1 Gew.-Teil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und lässt diese bei Raumtemperatur stehen.

Nach 24 h werden die Testtiere in den behandelten Boden gegeben und nach weiteren 2 bis 7 d wird der Wirkungsgrad des Wirkstoffs durch Auszählen der toten und lebenden Testinsekten in % bestimmt. Der Wirkungsgrad ist 100%, wenn alle Testinsekten abgetötet worden sind, der ist 0%, wenn noch genau so viele Testinsekten leben wie bei der unbehandelten Kontrolle.

Bei diesem Test zeigen z. B. die folgenden Verbindungen der Herstellungsbeispiele überlegene Wirkung gegenüber dem Stand der Technik: 5.

*Beispiel D:*

*Grenzkonzentrations-Test/Wurzelsystemische Wirkung*

Testinsekt: *Myzus persicae*
Lösungsmittel: 3 Gew.-Teile Aceton
Emulgator: 1 Gew.-Teil Alkylarylpolyglykolether

Zur Herstellung einer zweckmässigen Wirkstoffzubereitung vermischt man 1 Gew.-Teil Wirkstoff

mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl *(Brassica oleracea)*. Der Wirkstoff kann so von den Pflanzenwurzeln aus dem Boden aufgenommen und in die Blätter transportiert werden.

Für den Nachweis des wurzelsystemischen Effektes werden nach 7 d ausschliesslich die Blätter mit den obengenannten Testtieren besetzt. Nach weiteren 2 d erfolgt die Auswertung durch Zählen oder Schätzen der toten Tiere. Aus den Abtötungszahlen wird die wurzelsystemische Wirkung des Wirkstoffs abgeleitet. Sie ist 100%, wenn alle Testtiere abgetötet sind und 0%, wenn noch genau so viele Testinsekten leben wie bei der unbehandelten Kontrolle.

Bei diesem Test zeigen z. B. die folgenden Verbindungen der Herstellungsbeispiele überlegene Wirkung gegenüber dem Stand der Technik: 5.

**Patentansprüche**

1. Substituierte Phenylhydroxy-thio-malonsäurediamide der Formel (I)

$$\begin{array}{c} CONH_2 \\ | \\ R-C-OH \\ | \\ CONH_2 \end{array}$$

in welcher

R für Phenyl steht, das ein- bis dreifach gleich oder verschieden in m-, m'-, p-Stellung durch einen oder mehrere der folgenden Reste substituiert ist: Halogen, Nitro, Amino, OH, CN, $C_{1-4}$-Alkyl, $C_{1-4}$-Halogenalkyl, $C_{1-4}$-Alkoxy, $C_{1-4}$-Halogenalkoxy, Methylendioxy, Ethylendioxy, Difluormethylendioxy, halogensubstituiertes Ethylendioxy, $C_{1-4}$-Alkylthio, $C_{1-4}$-Halogenalkylthio, $C_{2-8}$-Alkoxyalkyl, $C_{2-8}$-Halogenalkoxyalkyl, $C_{1-4}$-Alkylsulfonyl, $C_{1-4}$Halogenalkoxyalkyl, $C_{1-4}$-Alkylsulfonyl, $C_{1-4}$-Halogenalkylsulfonyl, Carboxyl, Carbalkoxy, mit Ausnahme von Phenyl, das einfach in m- oder p-Stellung durch F, Cl, $CH_3$, $CF_3$, $OCH_3$, $OCF_3$, $NO_2$, $NH_2$ substituiert ist, sowie mit Ausnahme von Phenyl, das zweifach in m-, m'- und p-Stellung durch Cl substituiert ist, sowie mit Ausnahme von m-Chlor-p-methylphenyl.

2. Verfahren zur Herstellung der substituierten Phenylhydroxymalonsäurediamide der Formel

$$\begin{array}{c} CONH_2 \\ | \\ R-C-OH \\ | \\ CONH_2 \end{array} \qquad (I)$$

in welcher

R für Phenyl steht, das ein- bis dreifach gleich oder verschieden in m-, m'-, p-Stellung durch einen oder mehrere der folgenden Reste substituiert ist: Halogen, Nitro, Amino, OH, CN, $C_{1-4}$-Alkyl, $C_{1-4}$-Halogenalkyl, $C_{1-4}$-Alkoxy, $C_{1-4}$-Halogenalkoxy, Methylendioxy, Ethylendioxy, Difluormethylendioxy, halogensubstituiertes Ethylendioxy, $C_{1-4}$-Alkylthio, $C_{1-4}$-Halogenalkylthio, $C_{2-8}$-Alkoxyalkyl, $C_{2-8}$-Halogenalkoxyalkyl, $C_{1-4}$-Alkylsulfonyl, $C_{1-4}$-Halogenalkoxyalkyl, $C_{1-4}$-Alkylsulfonyl, $C_{1-4}$-Halogenalkylsulfonyl, Carboxyl, Carbalkoxy, mit Ausnahme von Phenyl, das einfach in m- oder p-Stellung durch F, Cl, $CH_3$, $CF_3$, $OCH_3$, $OCF_3$, $NO_2$, $NH_2$ substituiert ist, sowie mit Ausnahme von Phenyl, das zweifach in m-, m'- und p-Stellung durch Cl substituiert ist, sowie mit Ausnahme von m-Chlor-p-methylphenyl,

dadurch gekennzeichnet, dass man

a) substituierte Trimethylsilyloxyphenylmalonsäuredinitrile der Formel (II)

$$\begin{array}{c} CN \\ | \\ R-C-OSi(CH_3)_3 \\ | \\ CN \end{array} \qquad (II)$$

in welcher

R die oben angegebene Bedeutung hat,

mit anorganischen Säuren verseift, oder

b) Hydroxyphenylmalonsäureesteramide der Formel (III)

$$\begin{array}{c} COOR^1 \\ | \\ R-C-OH \\ | \\ CONH_2 \end{array} \qquad (III)$$

in welcher

R die oben angegebene Bedeutung hat und

$R^1$ für ggf. substituiertes Alkyl oder ggf. substituiertes Cycloalkyl steht,

mit Ammoniak umsetzt, oder

c) Hydroxyphenylmalonsäureester der Formel (IV)

$$\begin{array}{c} COOR^1 \\ | \\ R-C-OH \\ | \\ COOR^2 \end{array} \qquad (IV)$$

in welcher

R bzw. $R^1$ die oben angegebene Bedeutung haben und

$R^2$ die für $R^1$ angegebene Bedeutung hat, wobei $R^1$ und $R^2$ gleich oder verschieden sein können,

mit Ammoniak umsetzt, oder

d) Hydroxy- bzw. Trimethylsilyloxyphenylmalonsäureamidnitrile der allgemeinen Formel (V)

$$\begin{array}{c} CONH_2 \\ | \\ R-C-O-X \\ | \\ CN \end{array} \qquad (V)$$

in welcher
R die oben angegebene Bedeutung hat und
X für Wasserstoff oder $Si(CH_3)_3$ steht,
mit anorganischen Säuren verseift, oder
e) Acyloxyphenylmalonsäurediamide der allgemeinen Formel (VI)

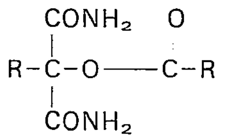 (VI)

in welcher
R die oben angegebene Bedeutung hat,
in Gegenwart von Basen verseift, oder
f) Acyloxyphenylmalonsäuredinitrile der allgemeinen Formel (VII)

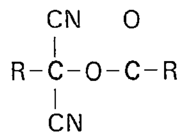 (VII)

in welcher
R die oben angegebene Bedeutung hat,
mit anorganischen Mineralsäuren verseift, oder
g) Acyloxyphenylmalonsäurediester der allgemeinen Formel (VIII)

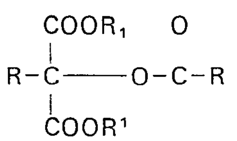 (VIII)

in welcher
R und $R^1$ die oben angegebene Bedeutung haben,
mit Ammoniak umsetzt.

3. Schädlingsbekämpfungsmittel, gekennzeichnet durch einen Gehalt an mindestens einem substituierten Phenylhydroxymalonsäurediamid der Formel (I).

4. Verwendung von substituierten Phenylhydroxymalonsäurediamiden der Formel (I) zur Bekämpfung von Schädlingen.

5. Verfahren zur Bekämpfung von Schädlingen, dadurch gekennzeichnet, dass man substituierte Phenylhydroxymalonsäurediamide der Formel (I) auf Schädlinge und/oder ihren Lebensraum einwirken lässt.

6. Verfahren zur Herstellung von Schädlingsbekämpfungsmitteln, dadurch gekennzeichnet, dass man substituiertes Phenylhydroxymalonsäurediamid der Formel (I) mit Streckmitteln und/oder oberflächenaktiven Mitteln vermischt.

**Claims**

1. Substituted phenylhydroxy-thio-malonic acid diamides of the Formula (I)

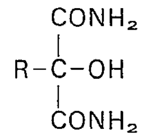 (I)

in which
R represents phenyl which is mono- to trisubstituted in the m-, m'-, or p-position by one or more of the following radicals, the substituents being identical or different: halogen, nitro, amino, OH, CN, $C_{1-4}$-alkyl, $C_{1-4}$-halogenoalkyl, $C_{1-4}$-alkoxy, $C_{1-4}$-halogenoalkoxy, methylenedioxy, ethylenedioxy, difluoromethylenedioxy, halogen-substituted ethylenedioxy, $C_{1-4}$-alkylthio, $C_{1-4}$-halogenoalkylthio, $C_{2-8}$-alkoxyalkyl, $C_{2-8}$-halogenoalkoxyalkyl, $C_{1-4}$-alkylsulphonyl, $C_{1-4}$-halogenoalkoxyalkyl, $C_{1-4}$-alkylsulphonyl, $C_{1-4}$-halogenoalkylsulphonyl, carboxyl, carbalkoxy, with the exception of phenyl which is monosubstituted in the m- or p-position by F, Cl, $CH_3$, $CF_3$, $OCH_3$, $OCF_3$, $NO_2$ or $NH_2$, and with the exception of phenyl which is disubstituted in the m-, m'- and p-position by Cl, and with the exception of m-chloro-p-methylphenyl.

2. Process for the preparation of the substituted phenylhydroxymalonic acid diamides of the formula

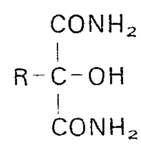 (I)

in which
R represents phenyl which is mono- to trisubstituted in the m-, m'-, or p-position by one or more of the following radicals, the substituents being identical or different: halogen, nitro, amino, OH, CN, $C_{1-4}$-alkyl, $C_{1-4}$-halogenoalkyl, $C_{1-4}$-alkoxy, $C_{1-4}$-halogenoalkoxy, methylenedioxy, ethylenedioxy, difluoromethylenedioxy, halogen-substituted ethylenedioxy, $C_{1-4}$-alkylthio, $C_{1-4}$-halogenoalkylthio, $C_{2-8}$-alkoxyalkyl, $C_{2-8}$-halogenoalkoxyalkyl, $C_{1-4}$-alkylsulphonyl, $C_{1-4}$-halogenoalkoxyalkyl, $C_{1-4}$-alkylsulphonyl, $C_{1-4}$-halogenoalkylsulphonyl, carboxyl, carbalkoxy, with the exception of phenyl which is monosubstituted in the m- or p-position by F, Cl, $CH_3$, $CF_3$, $OCH_3$, $OCF_3$, $NO_2$ or $NH_2$, and with the exception of phenyl which is disubstituted in the m-, m'- and p-position by Cl, and with the exception of m-chloro-p-methylphenyl,
characterised in that
a) substituted trimethylsilyloxyphenylmalonic acid dinitriles of the Formula (II)

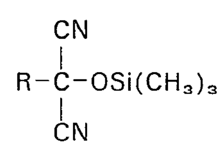 (II)

in which
R has the above-mentioned meaning,
are saponified with inorganic acids, or

b) hydroxyphenylmalonic acid ester amides of the Formula (III)

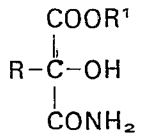
(III)

in which

R has the above-mentioned meaning and

$R^1$ represents optionally substituted alkyl or optionally substituted cycloalkyl,

are reacted with ammoniac, or

c) hydroxyphenylmalonic acid esters of the Formula (IV)

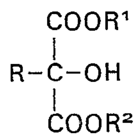
(IV)

in which

R and $R^1$ have the above-mentioned meaning and

$R^2$ has the meaning given for $R^1$, it being possible for $R^1$ and $R^2$ to be identical or different,

are reacted with ammoniac, or

d) hydroxy- or trimethylsilyloxyphenylmalonic acid amide nitriles of the general Formula (V)

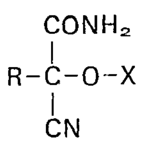
(V)

in which

R has the above-mentioned meaning and

X represents hydrogen or $Si(CH_3)_3$,

are saponified with inorganic acids, or

e) acyloxyphenylmalonic acid diamides of the general Formula (VI)

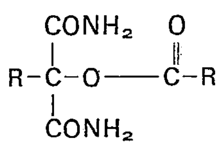
(VI)

in which

R has the above-mentioned meaning,

are saponified in the presence of bases, or

f) acyloxyphenylmalonic acid dinitriles of the general Formula (VII)

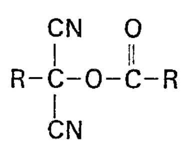
(VII)

in which

R has the above-mentioned meaning,

are saponified with inorganic mineral acids, or

g) acyloxyphenylmalonic acid diesters of the general Formula (VIII)

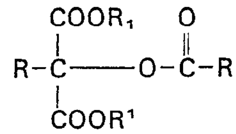
(VIII)

in which

R and $R^1$ have the above-mentioned meaning,

are reacted with ammonia.

3. Agents for combating pests, characterised in that they contain at least one substituted phenylhydroxymalonic acid diamide of the Formula (I).

4. Use of substituted phenylhydroxymalonic acid diamides of the Formula (I) for combating pests.

5. Process for combating pests, characterised in that substituted phenylhydroxymalonic acid diamides of the Formula (I) are allowed to act on pests and/or their habitat.

6. Process for the preparation of agents for combating pests, characterised in that substituted phenylhydroxymalonic acid diamide of the Formula (I) is mixed with extenders and/or surface-active agents.

## Revendications

1. Diamines d'acides phénylhydroxy-thiomaloniques substitués de formule (I):

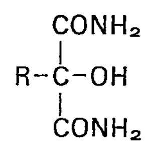
(I)

dans laquelle

R représente un groupe phényle qui est substitué une à trois fois, de manière identique ou différente, en position m, m', p par un ou plusieurs des restes suivants: de l'halogène, un groupe nitro, amino, OH, CN, alkyle en $C_1$-$C_4$, halogènealkyle en $C_1$-$C_4$, alcoxy en $C_1$-$C_4$, halogènealcoxy en $C_1$-$C_4$, méthylènedioxy, éthylènedioxy, difluorométhylènedioxy, éthylènedioxy à substituant(s) halogéno, alkylthio en $C_1$-$C_4$, halogénoalkylthio en $C_1$-$C_4$, alcoxyalkyle en $C_2$-$C_8$, halogénoalcoxyalkyle en $C_2$-$C_8$, alkylsulfonyle en $C_1$-$C_4$, halogénoalcoxyalkyle en $C_1$-$C_4$, alkylsulfonyle en $C_1$-$C_4$, halogénoalkylsulfonyle en $C_1$-$C_4$, carboxyle, carbalcoxy, à l'exclusion d'un groupe phényle qui est substitué une fois en position m ou p par F, Cl, $CH_3$, $CF_3$, $OCH_3$, $OCF_3$, $NO_2$, $NH_2$, ainsi qu'à l'exclusion d'un groupe phényle qui est substitué deux fois en position m, m' et p par Cl, ainsi qu'à l'exclusion du groupe m-chloro-p-méthylphényle.

2. Procédé de préparation des diamines d'acides phénylhydroxymaloniques substitués de formule:

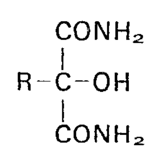
(I)

dans laquelle

R représente un groupe phényle qui est substitué une à trois fois, de manière identique ou différente, en position m, m', p par un ou plusieurs des restes suivants: de l'halogène, un groupe nitro, amino, OH, CN, alkyle en $C_1$-$C_4$, halogènealkyle en $C_1$-$C_4$, alcoxy en $C_1$-$C_4$, halogènealcoxy en $C_1$-$C_4$, méthylènedioxy, éthylènedioxy, difluoro-méthylènedioxy, éthylènedioxy à substituant(s) halogéno, alkylthio en $C_1$-$C_4$, halogénoalkylthio en $C_1$-$C_4$, alcoxyalkyle en $C_2$-$C_8$, halogénoalcoxyalkyle en $C_2$-$C_8$, alkylsulfonyle en $C_1$-$C_4$, halogénoalcoxyalkyle en $C_1$-$C_4$, alkylsulfonyle en $C_1$-$C_4$, halogénoalkylsulfonyle en $C_1$-$C_4$, carboxyle, carbalcoxy, à l'exclusion d'un groupe phényle qui est substitué une fois en position m ou p par F, Cl, $CH_3$, $CF_3$, $OCH_3$, $OCF_3$, $NO_2$, $NH_2$, ainsi qu'à l'exclusion d'un groupe phényle qui est substitué deux fois en position m, m' et p par Cl, ainsi qu'à l'exclusion du groupe m-chloro-p-méthylphényle, caractérisé en ce que:

a) on saponifie avec des acides minéraux des dinitriles d'acides triméthylsilyloxyphénylmaloniques substitués de formule (II):

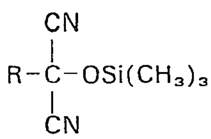

(II)

dans laquelle

R a le sens indiqué ci-dessus, ou

b) on fait réagir avec l'ammoniac des esters-amides d'acides hydroxyphénylmaloniques de formule (III):

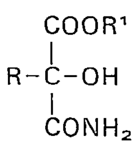

(III)

dans laquelle

R a le sens indiqué ci-dessus, et

$R^1$ représente un groupe alkyle éventuellement substitué ou un groupe cycloalkyle éventuellement substitué, ou

c) on fait réagir avec l'ammoniac des esters d'acides hydroxyphénylmaloniques de formule (IV):

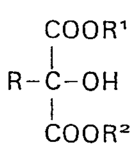

(IV)

dans laquelle

R ou $R^1$ ont le sens indiqué ci-dessus, et

$R^2$ a le sens indiqué pour $R^1$, les symboles $R^1$ et $R^2$ pouvant être identiques ou différents, ou

d) on saponifie avec des acides minéraux des amides-nitriles d'acides hydroxy- ou triméthylsilyloxy-phénylmaloniques de formule générale (V):

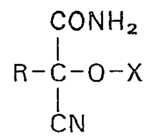

(V)

dans laquelle

R a le sens indiqué ci-dessus, et

X représente un atome d'hydrogène ou le groupe $Si(CH_3)_3$, ou

e) on saponifie en présence de bases des diamides d'acides acyloxyphénylmaloniques de formule générale (VI):

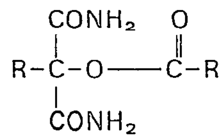

(VI)

dans laquelle

R a le sens indiqué ci-dessus, ou

f) on saponifie avec des acides minéraux des dinitriles d'acides acyloxyphénylmaloniques de formule générale (VII):

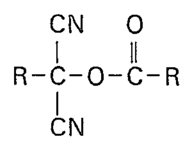

(VII)

dans laquelle

R a le sens indiqué ci-dessus, ou

g) on fait réagir avec l'ammoniac des diesters d'acides acyloxyphénylmaloniques de formule générale (VIII):

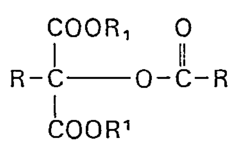

(VIII)

dans laquelle

R et $R^1$ ont le sens indiqué ci-dessus.

3. Pesticides, caractérisés par une teneur en au moins un diamide d'acide phénylhydroxymalonique substitué de formule (I).

4. Utilisation des diamines d'acides phénylhydroxymaloniques substitués, de formule (I), pour lutter contre les parasites.

5. Procédé de lutte contre les parasites, caractérisé en ce que l'on fait agir sur les parasites et/ou sur leur espace vital des diamides d'acides phénylhydroxymaloniques substitués de formule (I).

6. Procédé de préparation de pesticides, caractérisé en ce que l'on mélange du diamide d'acide phénylhydroxymalonique substitué de formule (I) avec des agents d'allongement et/ou des agents tensio-actifs.